# FASCICULE DE BREVET EUROPEEN

(11) **EP 1 171 021 B1**
(45) Date de publication et mention de la délivrance du brevet: **02.07.2003**
(21) Numéro de dépôt: 00918970.5
(22) Date de dépôt: 13.04.2000
(51) Int. Cl.: A47J 31/40

(54) **DISPOSITIF ET PROCEDE DE COMMANDE DE LA FERMETURE ET DE L'OUVERTURE D'UNE CHAMBRE D'EXTRACTION DE MACHINE A CAFE**
VORRICHTUNG UND VERFAHREN ZUM STEUERN DES SCHLIESS- UND ÖFFNUNGSPROZESSES EINER BRÜHKAMMER IN EINER KAFFEEMASCHINE
DEVICE AND METHOD FOR CONTROLLING THE CLOSING AND OPENING OF AN EXTRACTION CHAMBER OF A COFFEE MAKER

(30) Priorité: 27.04.1999 FR 9905433
(43) Date de publication de la demande: 16.01.2002
(73) Titulaire: Compagnie Méditerraneenne des Cafes, 06510 Carros (FR)
(72) Inventeur: BLANC, Jean-Pierre, Cabinet Hautier, 06000 Nice (FR); FERRIER, Christian, Cabinet Hautier, 06000 Nice (FR)
(74) Mandataire: Hautier, Jean-Louis
(86) Numéro de dépôt international: FR0000959
(87) Numéro de publication internationale: WO00064318

(56) Documents cités:
- WO-A-94/03092
- WO-A-95/17121
- US-A- 4 484 515

## Description

La présente invention concerne tout d'abord un dispositif de commande de la fermeture et de l'ouverture de la chambre d'extraction d'une machine à café.

L'invention a également trait à un procédé pour la commande de la fermeture de la chambre d'extraction.

Ce dispositif et ce procédé trouveront particulièrement leur application dans des machines à café de type espresso à usage domestique ou professionnelle telle que divulgué dans les brevets US-A-4 484 515 ou WO-A-94 03092.

Essentiellement, les machines à café concernées sont des machines dans lesquelles la chambre d'extraction comporte deux parties mobiles l'une par rapport à l'autre. Cette mobilité étant apportée par une motorisation électrique pour ouvrir ou fermer la chambre d'extraction.

Il convient de rappeler que la chambre d'extraction délimite un volume interne apte à recevoir une dose de café moulu dont sera ensuite extraite la boisson au café.

Une application particulière consistera à employer la présente invention pour l'usage de machines à café aptes à recevoir des doses préemballées de café moulu.

Ces doses préemballées de café moulu sont par la suite dénommées dosettes.

Selon l'état de la technique actuelle, il est nécessaire d'opérer différentes phases d'ouverture et de fermeture de la chambre d'extraction pour permettre le fonctionnement de la machine à café.

En effet, dans un premier temps, le café moulu doit être introduit au sein de la chambre d'extraction, ce qui nécessite son ouverture.

Par la suite, avant d'engager la lixiviation forcée, la chambre d'extraction doit être fermée de façon étanche.

Actuellement, on détecte la position fermée de la chambre d'extraction par le biais d'un capteur de position placé sur l'organe moteur ou sur un élément mobile dont la position révèle la fermeture de la chambre d'extraction.

Force est de constater que ce type de détection de fermeture présente différents inconvénients.

En premier lieu, il n'y a pas d'adaptation de la détection aux variations dimensionnelles éventuelles des pièces constitutives de la machine.

Ainsi, en cas de jeu, de variations dimensionnelles dues aux tolérances de fabrication, ou autres, la position fermée optimale de la chambre d'extraction peut évoluer sans que cela soit révélé par un capteur de position.

De plus, dans le cas particulier de l'usage de dosettes, celles-ci peuvent également présenter des variations dimensionnelles.

En particulier, certaines dosettes comportent un pourtour rigide permettant de renforcer la dosette et de participer à l'étanchéité de la chambre d'extraction pendant l'extraction du café.

Le pourtour rigide de telles dosettes peut présenter de grands écarts dimensionnels.

Par conséquent, selon l'état actuel de la technique, le serrage de la chambre d'extraction peut ne pas être optimal.

Ainsi, la détection de fermeture par un capteur de position peut être déclenchée trop tôt, ce qui arrête prématurément la motorisation.

Par ailleurs, la fin du serrage peut être tardive (déclenchement du capteur de position après la position de fermeture optimale), ce qui induit d'éventuelles usures de pièces, un mauvais serrage ou encore une surconsommation d'énergie électrique inutile.

La présente invention a pour objet de remédier aux inconvénients des techniques actuelles sur ce point.

L'un de ses premiers buts est de permettre un positionnement parfait des deux parties mobiles composant la chambre d'extraction en position fermée.

Ainsi, l'alignement des bords des parties mobiles sera optimal assurant ainsi une bonne étanchéité et évitant toute usure.

Le serrage sera quant à lui également efficace évitant toute fuite et mettant à profit toute la puissance de la motorisation pour la fermeture.

De plus, l'arrêt parfait de la motorisation permettra une baisse de la consommation d'énergie de l'alimentation du moteur.

Enfin, même en cas de fortes variations dimensionnelles des pièces ou des dosettes, une adaptation immédiate du dispositif sera effectuée.

De plus, l'invention assure éventuellement un resserrage de la chambre au cours de la lixiviation pour maintenir l'étanchéité optimale tout au long du cycle.

La présente invention concerne un dispositif de commande de la fermeture et de l'ouverture de la chambre d'extraction d'une machine à café de type espresso, ladite chambre d'extraction comportant deux parties mobiles l'une par rapport à l'autre par une motorisation électrique pour ouvrir ou fermer la chambre d'extraction, caractérisé par le fait qu'il présente :
- des moyens de mesure de l'intensité du courant d'alimentation de la motorisation au moins pendant la phase de fermeture de la chambre d'extraction ;
- des moyens de détection une baisse de la dérivée par rapport au temps du courant d'alimentation sous un seuil prédéterminé, permettant de détecter la position fermée optimale pour la chambre d'extraction, afin de stopper le mouvement des parties mobiles lorsque cette position est atteinte.

Ce dispositif pourra se présenter sous différents modes de réalisation dont ceux énoncés ci-après :
les moyens de mesure présentent :
   - une résistance électrique de mesure, aux bornes de laquelle la tension V_{R}, est proportionnelle à la valeur du courant d'alimentation de la motorisation,
   - un ensemble à amplificateur opérationnel non-inverseur permettant d'amplifier la tension V_{R} aux bornes de la résistance de mesure,
   afin d'obtenir une grandeur électrique reflétant le courant d'alimentation pour l'exploitation par les moyens de détection.
- Il comprend un convertisseur analogique-numérique pour la conversion du courant électrique d'alimentation ou de la grandeur électrique le reflétant en une grandeur numérique.
- Les moyens de détection comprennent un microprocesseur avec une borne d'entrée qui reçoit la grandeur numérique reflétant le courant d'alimentation, et un programme de calcul de la dérivée par rapport au temps dudit courant ou de ladite grandeur électrique.
- Les moyens de détection comportent au moins une sortie de commande de la motorisation électrique selon la valeur de la dérivée par rapport au temps.
- Il comporte un capteur de position permettant de détecter la position ouverte de la chambre d'extraction selon la position angulaire de la motorisation ou d'un engrenage de transmission.
- Il comporte au moins un capteur de détection de présence d'une dosette.
- Il comporte un capteur détectant la présence d'une dosette en position haute et un capteur détectant la présence d'une dosette en position basse.
- Il comporte un capteur de position et un plateau solidaire d'un engrenage de transmission, ledit plateau étant divisé en deux demi-disques de rayons différents et le plateau est positionné sur l'engrenage de sorte que les fronts de transition entre les deux demi-disques passent respectivement au regard du capteur de position lorsque la chambre d'extraction est en position ouverte et lorsque la chambre d'extraction est en position fermée maximale.

L'invention concerne également un procédé pour la commande de la fermeture de la chambre d'extraction d'une machine à café de type espresso, ladite chambre d'extraction comportant deux parties mobiles l'une par rapport à l'autre par une motorisation électrique pour ouvrir ou fermer la chambre d'extraction, ledit procédé pouvant être mis en oeuvre par le dispositif, caractérisé par le fait que
- on mesure, au moins pendant la phase de fermeture de la chambre d'extraction, l'intensité du courant d'alimentation de la motorisation,
- on détecte une baisse de la dérivée par rapport au temps de l'intensité d'alimentation sous un seuil prédéterminé, pour détecter la position fermée optimale de la chambre d'extraction, afin de stopper le mouvement des parties mobiles lorsque cette position est atteinte.

Ce procédé comporte les modes préférés de réalisation suivants :
- On traite l'intensité du courant d'alimentation mesurée afin d'obtenir une grandeur numérique reflétant ladite intensité.
- On détecte la baisse de la dérivée par rapport au temps de l'intensité d'alimentation en effectuant itérativement les étapes suivantes :
   - on saisit la valeur de la grandeur numérique à deux instants distants d'un intervalle de temps fixé
   - on calcule la pente de la droite passant par les deux points définis par leur abscisse temporelle et leur ordonnée de la valeur de la grandeur numérique.
   - On stoppe la motorisation lorsque la pente de la droite passe sous le seuil prédéterminé pendant un nombre prédéterminé d'itérations.

Au cours de l'extraction, on effectue un mouvement supplémentaire de fermeture de la chambre d'extraction.

Le mouvement supplémentaire de fermeture est séquentiel.

On prolonge le mouvement supplémentaire de fermeture jusqu'à la fin de l'extraction ou l'obtention d'une position fermée maximale de la chambre d'extraction.

Les dessins ci-joints sont donnés à titre d'exemples indicatifs et non limitatifs. Ils représentent un mode de réalisation préféré selon l'invention. Ils permettront de comprendre aisément l'invention.

La figure 1 illustre globalement une chambre d'extraction munie de deux parties mobiles à laquelle peut s'appliquer le dispositif ici présenté.

La figure 2 illustre un détail selon la coupe A-A de la figure 1.

La figure 3 présente un mode de réalisation d'un schéma électronique intégré dans le dispositif selon l'invention.

La figure 4 est un diagramme présentant une suite d'étapes afin de mettre en oeuvre la présente invention.

La figure 5 est une vue globale d'une chambre d'extraction dans le cas d'une variante de l'invention.

Les machines à café dont la chambre d'extraction 5 comportent deux parties mobiles 3, 4 peuvent présenter différentes conceptions.

Ainsi, un fonctionnement translatif des parties mobiles 3, 4 peut être réalisé pour ouvrir et fermer la chambre d'extraction 5.

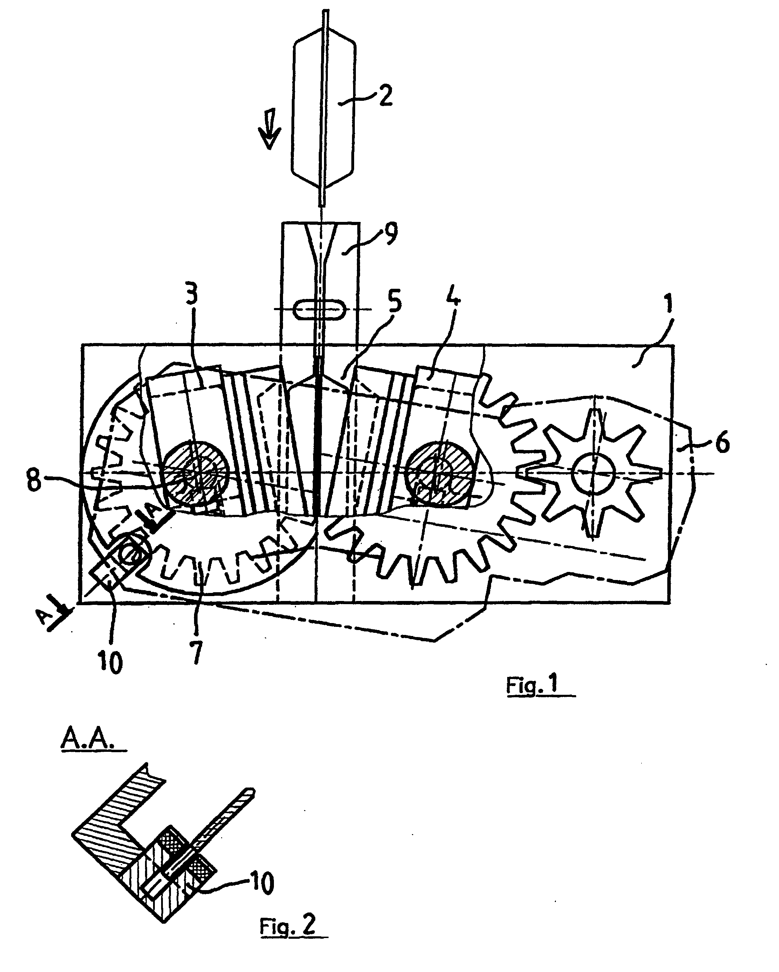

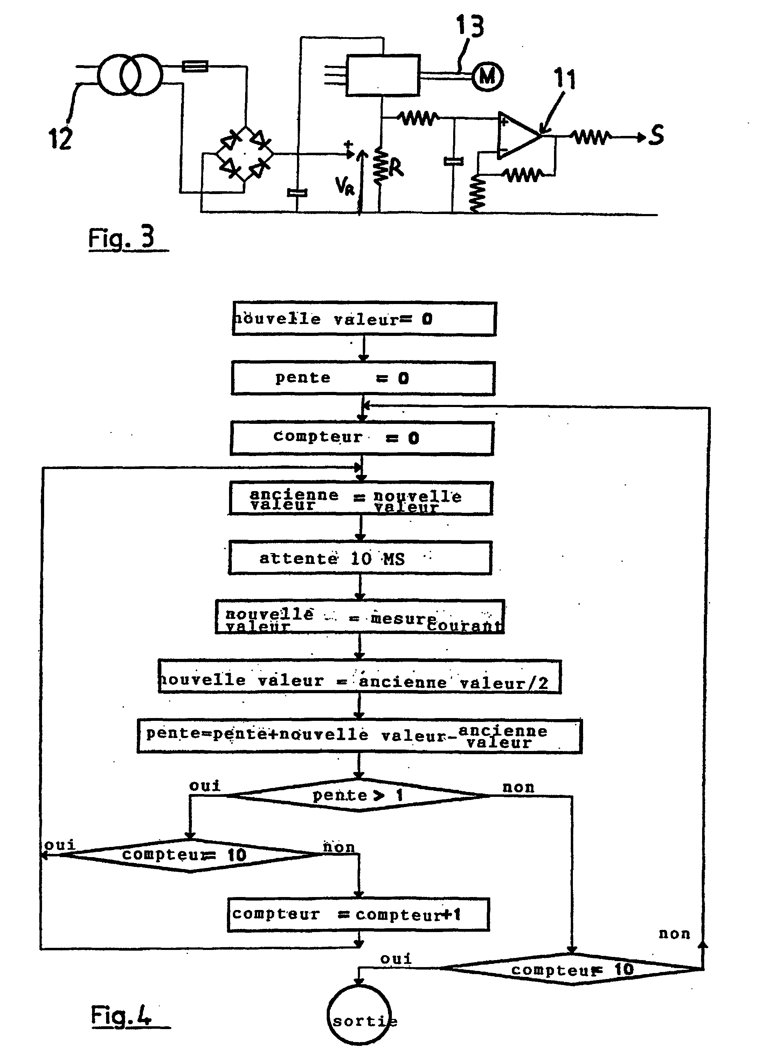

La figure 1 illustre un autre mode de réalisation particulièrement avantageux où les parties mobiles 3, 4 possèdent une liberté de mouvement en rotation et en translation par le biais d'un axe transversal à excentrique 8 présent sur chaque partie mobile 3, 4.

Un système à engrenage 7 permet de transmettre la puissance produite par la motorisation 6 pour entraîner les parties mobiles 3, 4.

Selon ce mode de réalisation, la chambre d'extraction 5 peut passer d'une position ouverte en forme de "V" pour l'insertion de la dose de café moulu ou d'une dosette 2 à une position fermée où les deux parties mobiles 3, 4 viennent en contact linéaire et parallèle.

L'extraction du café moulu utilisé ou de la dosette 2 usagée pourra s'effectuer par une nouvelle mise en rotation des parties mobiles 3, 4 formant un accent circonflexe.

Il est à noter que la position fermée de la chambre 5 nécessite une grande précision pour les raisons précédemment exposées.

Cependant, les phases d'ouverture pour l'introduction d'une dosette 2 ou pour l'évacuation ne nécessitent pas une telle précision.

La figure 1 présente un groupe d'extraction selon ce fonctionnement.

Est également représentée en figure 1, une dosette 2 comportant un pourtour annulaire rigide.

Le dispositif selon l'invention présente tout d'abord des moyens de mesure de l'intensité du courant d'alimentation de la motorisation 6.

Cette mesure sera au moins effectuée durant la phase de fermeture de la chambre d'extraction 5.

Les moyens de mesure selon l'invention ont pour fonction de récupérer la valeur de l'intensité du courant d'alimentation de la motorisation 6 et éventuellement de traiter le courant d'alimentation pour obtenir une valeur exploitable directement par des moyens de détection.

En effet, le dispositif selon l'invention comprend également des moyens de détection d'une baisse de la dérivée par rapport au temps du courant d'alimentation sous un seuil prédéterminé.

Lors du passage de la position ouverte vers le haut de la chambre d'extraction 5 à la position fermée permettant la lixiviation forcée, la motorisation 6 voit l'intensité de son courant d'alimentation évoluer en fonction du temps.

Ainsi, au cours du serrage des deux parties mobiles 3, 4, l'une contre l'autre, un surplus de puissance est demandé au moteur, ce surplus se traduisant par une augmentation importante de l'intensité d'alimentation.

Lorsqu'un serrage optimal est intense, on constate une forte baisse de la pente sur la courbe d'évolution du courant d'alimentation par rapport au temps.

Cette baisse de la pente peut aller jusqu'à l'annulation de la dérivée avant qu'une phase de descente du courant d'alimentation ne s'opère.

Les moyens de détection ici présentés permettent de détecter la progression du courant d'alimentation et surtout de révéler le moment où la croissance de ce courant diminue.

Le seuil prédéterminé en dessous duquel on détectera la baisse du courant d'alimentation pourra être fixé par construction.

A titre d'exemple, on pourra prévoir une détection pour une pente inférieure à un ou encore pour une pente égale à zéro (annulation de la dérivée temporelle du courant d'alimentation).

Grâce à la détection de cette baisse du courant d'alimentation sous un seuil prédéterminé, on pourra opérer une commande de la motorisation et essentiellement son arrêt dans une position de fermeture de la chambre d'extraction 5 optimale.

Selon le mode de réalisation illustré en figure 3, les moyens de mesure pourront présenter un montage électronique au sein duquel sont présents :
- une résistance électrique référencée R de mesure,
- un ensemble référencé 11 à amplificateur opérationnel non inverseur.

La résistance R permet, par mesure de la tension V_{R} à ses bornes, d'obtenir une tension proportionnelle au courant d'alimentation de la motorisation 6.

L'ensemble 11 à amplificateur opérationnel à quant à lui pour fonction d'amplifier suivant un gain prédéterminé, la valeur de tension V_{R} ainsi obtenue.

On engendre ainsi une grandeur électrique référencée S en figure 3 en sortie de l'ensemble 11, la grandeur S reflétant le courant d'alimentation et étant exploitable par les moyens de détection.

Sont également indiqués en figure 3, l'entrée 12 d'alimentation du moteur immédiatement suivie dans le mode de réalisation illustré par un transformateur et un pont de diode.

La commande de puissance de la motorisation 6 est référencée par le repère 13.

Dans un mode préféré de réalisation, la grandeur S obtenue en sortie des moyens de mesure subie une transformation analogique numérique.

On utilisera pour ce faire, un convertisseur analogique numérique de conception courante.

Ainsi, la grandeur électrique S est transformée en une grandeur numérique apte à être utilisée par des moyens situés en aval.

En effet, dans un mode préféré de réalisation, les moyens de détection comprennent un microprocesseur dont une entrée reçoit la grandeur numérique ainsi obtenue.

Par ailleurs, les moyens de détection renfermeront un programme de calcul de la dérivée par rapport au temps de la valeur numérique ainsi obtenue reflétant le courant d'alimentation de la motorisation 6.

On pourra utiliser un microprocesseur de conception courante.

Une fois la détection de la baisse de la dérivée par rapport au temps du courant d'alimentation effectuée, les moyens de détection pourront commander la motorisation électrique 6.

Un arrêt de la motorisation sera dans ce cadre effectuée dès le passage de la dérivée en dessous d'une valeur seuil pouvant être par exemple égale à un ou encore égale à zéro (traduisant le sommet de la courbe d'intensité par rapport au temps).

Dans un mode particulier de réalisation, le dispositif pour la commande de la fermeture et de l'ouverture de la chambre d'extraction 5 ici présenté comportera en outre un capteur 10 de position ouverte de la chambre 5.

Ce capteur 10 est représenté aux figures 1 et 2.

Dans le mode illustré, le capteur 10 est situé au regard de l'un des engrenages 7 transmettant la puissance de la motorisation aux parties mobiles 3, 4.

Lorsqu'une certaine position angulaire de l'engrenage est atteinte, le capteur de position est activé et permet de détecter la position ouverte de la chambre 5.

Un capteur de conception courante pour la détection de la position pourra être utilisé.

On décrit ci-après les étapes de fonctionnement du dispositif selon l'invention et du procédé.

De façon courante, le groupe 1 part d'une position où la chambre d'extraction 5 est ouverte. L'ouverture permet l'introduction du café moulu ou d'une dosette 2.

Un mode de réalisation est illustré dans ce cadre en figure 1.

Par la suite, l'utilisateur pourra commander manuellement le déclenchement de l'appareil.

Ce déclenchement engendre une mise en route de la motorisation 6 et un déplacement progressif des parties mobiles 3, 4 qui tendent à se rapprocher l'une de l'autre.

Au bout d'un certain temps, les parties mobiles 3, 4 viennent en contact progressif ce qui est révélé par une augmentation du courant d'alimentation de la motorisation.

A l'aboutissement de cette phase, un serrage optimal intervient correspondant à l'obtention d'une puissance maximale du moteur révélé par une annulation de la dérivée du courant d'alimentation ou pour le moins par une baisse sensible de la pente du courant d'alimentation par rapport au temps.

Par mesure du courant d'alimentation (par le biais des moyens de mesure), on récupère l'évolution temporelle du courant.

Par le biais des moyens de détection, cette évolution est traitée afin de détecter une baisse de la pente en dessous d'un seuil prédéterminé.

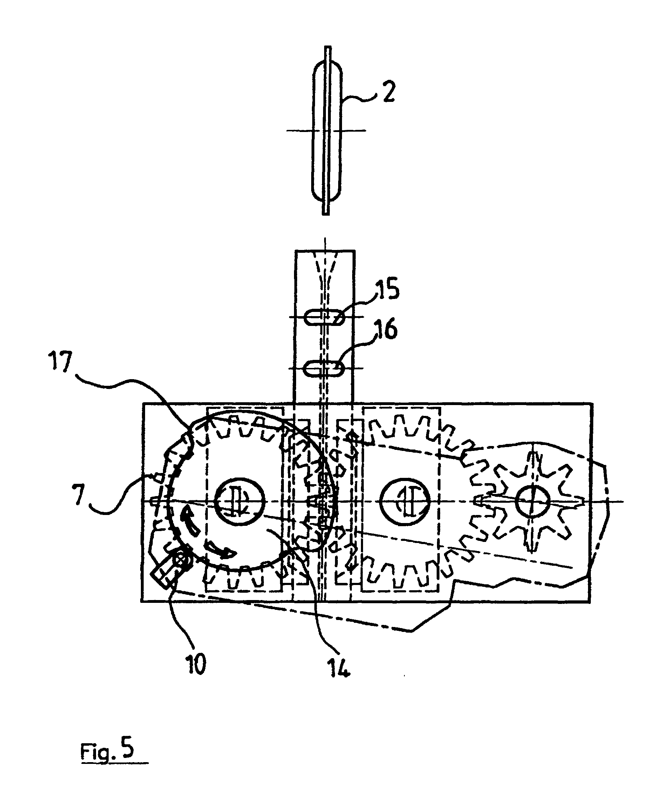

Les étapes correspondantes à cette phase de détection sont illustrées dans un mode de réalisation à la figure 4.

Ces étapes sont sensiblement les suivantes :
- remise à zéro de la valeur du courant et de la pente (réinitialisation avant l'exploitation des valeurs de courant d'alimentation mesurées),
- utilisation d'un compteur permettant de compter le nombre d'itérations de calcul effectuées.

Au début de cycle, mise à zéro de compteur,
- dans le cadre d'un calcul itératif bouclé, transfert de la dernière valeur du courant d'alimentation mesurée (nouvelle valeur) en la valeur dite ancienne valeur,
- attente durant une certaine durée de temporisation. Selon l'exemple, la durée de temporisation est de 10 ms.
- intégration dans les moyens de détection d'une nouvelle valeur mesurée du courant d'alimentation,
- corrections éventuelles par moyenne arithmétique de la nouvelle valeur,
- calcul de la pente de la courbe du courant d'alimentation en fonction du temps en utilisant les deux valeurs en mémoire (nouvelle valeur et ancienne valeur) espacées par un intervalle de temps de temporisation prédéterminée (ici de 10 ms). Eventuellement, une correction par moyenne arithmétique peut être effectuée comme dans le cas illustré en figure 4,
- si la pente mesurée est supérieure à un seuil déterminé (selon l'exemple illustré en figure 4, le seuil est 1), le calcul itératif se poursuit.
- Dans le cas représenté en figure 4, on effectue un nombre d'itérations déterminé durant lesquelles une pente en dessous du seuil prédéterminé est détectée afin de s'assurer du caractère continu et réel de la baisse détectée.
- si la baisse n'est pas détectée en dessous du seuil prédéterminé, le calcul se poursuit et le compteur d'itérations est remis à zéro.
- Ces étapes de calcul peuvent être réalisées au sein du microprocesseur que comportent les moyens de détection. Ces calculs seront postérieurs à la mesure des moyens de mesure permettant d'injecter aux moyens de détection la valeur du courant d'alimentation ou une valeur reflétant l'évolution de ce courant d'alimentation. En particulier, un traitement préalable de l'intensité du courant d'alimentation mesurée permettra d'obtenir une grandeur numérique la reflétant.

On décrit ci-après plus précisément le mode de réalisation de l'invention représenté en figure 5.

Selon cette variante, deux capteurs de présence 15, 16 de dosette 2 sont formés. Ils permettent de détecter la dosette 2 à son approche de la chambre d'extraction 5.

Deux capteurs 15, 16 sont utiles en ce qu'ils permettent la détection de la présence éventuelle et accidentelle de deux dosettes. Dans ce cas, une information d'erreur peut être générée et affichée.

L'utilisateur est invité à retirer la seconde dosette avant d'entamer la fabrication de la boisson.

Ces capteurs peuvent avoir également pour fonction de détecter si la dosette est au format opérationnel.

Toujours dans l'exemple de la figure 5, une variante de repérage de la position ouverte/fermée de la chambre d'extraction 5 est représentée.

En effet, un capteur 10 peut être mis en oeuvre non seulement pour détecter la position ouverte , mais aussi pour repérer une position fermée maximale de la chambre d'extraction 5.

La fermeture de la chambre 5 peut donc s'opérer jusqu'à une limite maximale fixée par la détection du capteur 10.

La présente invention concerne une solution avantageuse pour repérer chacune de ces deux positions ouverte/fermée.

A cet effet, un plateau 14, solidaire d'un des engrenages 7 de transmission de la puissance de la motorisation aux deux parties mobiles, est constitué.

Dans l'exemple préféré de la figure 5, le plateau 14 est divisé en deux demi-disques différenciés par leur rayon. Cette différence génère deux fronts 17 diamétralement opposés.

Selon l'invention, on ajuste la position des fronts 17 de sorte qu'ils correspondent aux positions ouverte et de fermeture maximale de la chambre d'extraction. Cet ajustement est effectué en relation avec le mouvement de l'engrenage 7 qui est prévu dans ce cadre pour opérer un demi tour entre chacune des positions extrêmes.

On décrit ci-après un mode de fonctionnement de la variante du dispositif présenté ci-dessus.

Le chargement de la dosette 2 s'effectue lorsque la chambre 5 est ouverte. Le capteur 10 est alors en position de détection, parce que le premier front 17 est atteint.

La fermeture de la chambre 5 est opérée et s'arrête lorsque la détection du seuil maximal est réalisée.

La lixiviation démarre alors pour produire la boisson.

Au cours de la lixiviation, des mouvements saccadés et périodiques de fermeture sont opérés pour parfaire la fermeture.

On a en effet remarqué que le serrage pouvait évoluer défavorablement au cours du cycle de lixiviation, notamment sous l'effet de l'humidificateur du café et du filtre.

Le serrage supplémentaire ici proposé pallie cet inconvénient.

Ce mouvement supplémentaire peut être limité par le biais du capteur 10 lorsque le second front 17 est atteint.

Le dispositif détecte alors que la position fermée maximale est obtenue et que le serrage n'est plus perfectible.

### REFERENCES

- 1.: Groupe
- 2.: Dosette
- 3.: Partie mobile
- 4.: Partie mobile
- 5.: Chambre d'extraction
- 6.: Motorisation
- 7.: Engrenage
- 8.: Axe à excentrique
- 9.: Guide
- 10.: Capteur
- 11.: Ensemble à amplificateur opérationnel
- 12.: Alimentation
- 13.: Commande motorisation
- 14.: Disque
- 15.: Capteur position haut
- 16.: Capteur position basse
- 17.: Front
- S.: Grandeur analogique
- R.: Résistance électrique
- V_{R}.: Tension aux bornes de la résistance R

## Revendications

1. Dispositif de commande de la fermeture et de l'ouverture de la chambre d'extraction (5) d'une machine à café de type espresso, ladite chambre d'extraction (5) comportant deux parties mobiles (3, 4) l'une par rapport à l'autre par une motorisation (6) électrique pour ouvrir ou fermer la chambre d'extraction (5), **caractérisé par le fait qu'**il présente :
- des moyens de mesure de l'intensité du courant d'alimentation de la motorisation (6) au moins pendant la phase de fermeture de la chambre d'extraction (5) ;
- des moyens de détection d'une baisse de la dérivée par rapport au temps du courant d'alimentation sous un seuil prédéterminé, permettant de détecter la position fermée optimale pour la chambre d'extraction (5), afin de stopper le mouvement des parties mobiles (3, 4) lorsque cette position est atteinte.

2. Dispositif de commande selon la revendication 1
**caractérisé par le fait**
**que** les moyens de mesure présentent :
- une résistance électrique (R) de mesure aux bornes de laquelle la tension V_{R} est proportionnelle à la valeur du courant d'alimentation de la motorisation (6),
- un ensemble (11) à amplificateur opérationnel non inverseur permettant d'amplifier la tension V_{R} aux bornes de la résistance de mesure (R),
afin d'obtenir une grandeur électrique (S) reflétant le courant d'alimentation pour l'exploitation par les moyens de détection.

3. Dispositif de commande selon l'une quelconque des revendications 1 ou 2 **caractérisé par le fait qu'**il comprend :
un convertisseur analogique-numérique pour la conversion du courant électrique d'alimentation ou de la grandeur électrique (S) le reflétant en une grandeur numérique.

4. Dispositif de commande selon la revendication 3
**caractérisé par le fait**
**que** les moyens de détection comprennent un microprocesseur avec une borne d'entrée qui reçoit la grandeur numérique reflétant le courant d'alimentation, et un programme de calcul de la dérivée par rapport au temps dudit courant ou de ladite grandeur électrique.

5. Dispositif de commande selon l'une quelconque des revendications 1 ou 4 **caractérisé par le fait**
**que** les moyens de détection comportent au moins une sortie de commande de la motorisation électrique (6) selon la valeur de la dérivée par rapport au temps.

6. Dispositif de commande selon l'une quelconque des revendications 1 à 5 **caractérisé par le fait**
**qu'**il comporte un capteur de position (10) permettant de détecter la position ouverte de la chambre d'extraction (5) selon la position angulaire de la motorisation (6) ou d'un engrenage de transmission (7).

7. Dispositif de commande selon l'une quelconque des revendications 1 à 6, **caractérisé par le fait**
**qu'**il comporte au moins un capteur (15, 16) de détection de présence d'une dosette (2).

8. Dispositif de commande selon la revendication 7
**caractérisé par le fait**
**qu'**il comporte un capteur (15) détectant la présence d'une dosette (2) en position haute et un capteur (16) détectant la présence d'une dosette (2) en position basse.

9. Dispositif de commande selon l'une quelconque des revendications 1 à 8 **caractérisé par le fait**
**qu'**il comporte un capteur de position (10) et un plateau (14) solidaire d'un engrenage de transmission (7), ledit plateau étant divisé en deux demi-disques de rayons différents et que le plateau (14) est positionné sur l'engrenage (7) de sorte que les fronts (17) de transition entre les deux demi-disques passent respectivement au regard du capteur de position (10) lorsque la chambre d'extraction (5) est en position ouverte et lorsque la chambre d'extraction (6) est en position fermée maximale.

10. Procédé pour la commande de la fermeture de la chambre d'extraction (5) d'une machine à café de type espresso, ladite chambre d'extraction (5) comportant deux parties mobiles (3, 4) l'une par rapport à l'autre par une motorisation électrique (6) pour ouvrir ou fermer la chambre d'extraction (5), ledit procédé pouvant être mis en oeuvre par le dispositif selon l'une des revendications 1 à 9, **caractérisé par le fait que**
- on mesure, au moins pendant la phase de fermeture de la chambre d'extraction (5), l'intensité du courant d'alimentation de la motorisation (6),
- on détecte une baisse de la dérivée par rapport au temps de l'intensité d'alimentation sous un seuil prédéterminé, pour détecter la position fermée optimale de la chambre d'extraction (5), afin de stopper le mouvement des parties mobiles (3, 4) lorsque cette position est atteinte.

11. Procédé pour la commande de la fermeture de la chambre d'extraction (5) d'une machine à café de type espresso selon la revendication 10, **caractérisé par le fait**
**qu'**on traite l'intensité du courant d'alimentation mesurée afin d'obtenir une grandeur numérique reflétant ladite intensité.

12. Procédé pour la commande de la fermeture de la chambre d'extraction (5) d'une machine à café de type espresso selon la revendication 11, **caractérisé par le fait**
**qu'**on détecte la baisse de la dérivée par rapport au temps de l'intensité d'alimentation en effectuant itérativement les étapes suivantes :
- on saisit la valeur de la grandeur numérique à deux instants distants d'un intervalle de temps fixé
- on calcule la pente de la droite passant par les deux points définis par leur abscisse temporelle et leur ordonnée de la valeur de la grandeur numérique.

13. Procédé pour la commande de la fermeture de la chambre d'extraction (5) d'une machine à café de type espresso selon la revendication 12, **caractérisé par le fait**
**qu'**on stoppe la motorisation (6) lorsque la pente de la droite passe sous le seuil prédéterminé pendant un nombre prédéterminé d'itérations.

14. Procédé pour la commande de la fermeture de la chambre d'extraction (5) d'une machine à café de type espresso selon l'une quelconque des revendications 10 à 13 **caractérisé par le fait**
**qu'**au cours de l'extraction, on effectue un mouvement supplémentaire de fermeture de la chambre d'extraction (5).

15. Procédé pour la commande de la fermeture de la chambre d'extraction (5) d'une machine à café de type espresso selon la revendication 14 **caractérisé par le fait**
**que** le mouvement supplémentaire de fermeture est séquentiel.

16. Procédé pour la commande de la fermeture de la chambre d'extraction (5) d'une machine à café de type espresso selon l'une quelconque des revendications 13 ou 14 **caractérisé par le fait**
**qu'**on prolonge le mouvement supplémentaire de fermeture jusqu'à la fin de l'extraction ou l'obtention d'une position fermée maximale de la chambre d'extraction (5).

## Patentansprüche

1. Schließ- und Öffnung- Steuerungsvorrichtung der Brühkammer (5) einer Kaffeemaschine der Art von Espressomaschinen, bei der die Brühkammer (5) zwei bewegliche Teile (3, 4) besitzt, die mit Hilfe eines Elektroantriebs (6) relativ zueinander bewegt werden und dadurch die Brühkammer (5) öffnen oder schließen, **gekennzeichnet dadurch, daß** sie :
- Messmittel zur Messung der Stromaufnahme des Elektroantriebs (6) zumindest während der Schließphase der Brühkammer (5) besitzt,
- Sonden zur Erkennung des Rückgangs der zeitlichen Ableitung der Stromaufnahme des Elektromotors unter einen bestimmten Grenzwert besitzt, um die optimale Schließstellung der Brühkammer (5) zu erkennen und die Bewegung der beiden beweglichen Teile (3, 4) zu stoppen, wenn diese Stellung erreicht ist.

2. Steuerungsvorrichtung gemäß Anspruch 1, **gekennzeichnet dadurch, daß** die Messmittel:
- einen elektrischen Messwiderstand (R) besitzen, an dessen Klemmen die Spannung V_{R} anliegt, die der Stromaufnahme des Elektroantriebs (6) proportional ist, sowie
- eine Baugruppe (11) mit einem nicht invertierenden Operationsverstärker, mit dem die Spannung V_{R} an den Klemmen des Messwiderstandes (R) verstärkt werden kann,
um so eine elektrische Größe (S) zu erzeugen, die der Stromaufnahme entspricht und von den Sonden verarbeitet werden kann.

3. Steuerungsvorrichtung gemäß einem der Ansprüche 1 oder 2, **gekennzeichnet dadurch, daß**
sie einen Analog-Digital-Wandler zur Umwandlung der Stromaufnahme oder der ihr entsprechenden elektrischen Größe (S) in eine digitale Größe besitzt.

4. Steuerungsvorrichtung gemäß Anspruch 3, **gekennzeichnet dadurch, daß**
die Sonden einen Mikroprozessor mit einem Eingang besitzen, dem die der Stromaufnahme entsprechende digitale Größe zugeführt wird, und einem Rechenprogramm zur Bildung der zeitlichen Ableitung des genannten Stromes oder der genannten elektrischen Größe.

5. Steuerungsvorrichtung gemäß einem der Ansprüche 1 oder 4, **gekennzeichnet dadurch, daß**
die Sonden mindestens einen Ausgang zur Steuerung des Elektroantriebs (6) in Abhängigkeit von dem Wert der zeitlichen Ableitung besitzen.

6. Steuerungsvorrichtung gemäß einem der vorstehenden Ansprüche 1 bis 5, **gekennzeichnet dadurch, daß**
sie einen Weggeber (10) besitzt, um die geöffnete Stellung der Brühkammer (5) anhand der Winkelstellung des Elektroantriebs (6) oder eines Getriebes (7) erkennen zu können.

7. Steuerungsvorrichtung gemäß einem der Ansprüche 1 bis 6, **gekennzeichnet dadurch, daß**
sie mindestens eine Sonde (15, 16) zur Erkennung des Vorhandenseins einer Kapsel (2) besitzt.

8. Steuerungsvorrichtung gemäß Anspruch 7, **gekennzeichnet dadurch, daß**
sie eine Sonde (15) zur Feststellung des Vorhandenseins einer Kapsel (2) in der oberen Position und eine Sonde (16) zur Feststellung des Vorhandenseins einer Kapsel (2) in der unteren Position besitzt.

9. Steuerungsvorrichtung gemäß einem der Ansprüche 1 bis 8, **gekennzeichnet dadurch, daß**
sie einen Weggeber (10) und eine Platte (14) besitzt, die mit einem Getriebe (7) verbunden ist, diese Platte aus zwei Kreisscheibenhälften mit unterschiedlichen Radien besteht und die Platte (14) derart auf dem Getriebe (7) angeordnet ist, daß die Frontseiten (17) zwischen den beiden Halbscheiben jeweils vor dem Weggeber (10) vorbeilaufen, wenn die Brühkammer (5) offen und wenn die Brühkammer (6) in maximal geschlossener Stellung ist.

10. Verfahren zur Steuerung der Brühkammer (5) einer Kaffeemaschine der Art von Espressomaschinen, bei der die Brühkammer (5) zwei bewegliche Teile (3, 4) besitzt, die mit Hilfe eines Elektroantriebs (6) relativ zueinander bewegt werden und dadurch die Brühkammer (5) öffnen oder schließen, wobei das genannte Verfahren unter Einsatz eines der Ansprüche 1 bis 9 ablaufen kann, **gekennzeichnet dadurch, daß**
- die Stromaufnahme des Elektroantriebs (6) zumindest in der Schließphase der Brühkammer (5) gemessen wird, und
- der Abfall der zeitlichen Ableitung der Stromaufnahme unter einen vorgegebenen Grenzwert erkannt und dadurch die optimale Schließstellung der Brühkammer (5) ermittelt wird, um die Bewegung der beiden beweglichen Teile (3, 4) zu stoppen, wenn diese Stellung erreicht ist.

11. Verfahren zur Steuerung des Schließvorgangs der Brühkammer (5) einer Kaffeemaschine der Art einer Espressomaschine gemäß Anspruch 10, **gekennzeichnet dadurch, daß**
die gemessene Stromaufnahme verarbeitet wird, um eine digitale Größe zu erhalten, die ein Bild der genannten Stromstärke ist.

12. Verfahren zur Steuerung des Schließvorgangs der Brühkammer (5) einer Kaffeemaschine in Art einer Espressomaschine gemäß Anspruch 11, **gekennzeichnet dadurch, daß**
der Rückgang der zeitlichen Ableitung der Stromaufnahme durch iterative Ausführung folgender Schritte festgestellt wird :
- Erfassung des Wertes der digitalen Größe am Anfang und am Ende eines vorgegebenen Zeitintervalls und
- Berechnung der Steigung der Geraden durch die beiden Punkte, die durch die Zeit auf der Abszisse und die digitale Größe auf der Ordinate definiert sind.

13. Verfahren zur Steuerung der Brühkammer (5) einer Kaffeemaschine in Art einer Espressomaschine gemäß Anspruch 12, **gekennzeichnet dadurch, daß**
der Elektroantrieb (6) gestoppt wird, wenn die Steigung der Geraden bei einer vorgegebenen Zahl von Iterationsschritten unter dem vorgestimmten Grenzwert liegt.

14. Verfahren zur Steuerung des Schließvorgangs der Brühkammer (5) einer Kaffeemaschine in Art einer Espressomaschine gemäß einem der Ansprüche 10 bis 13, **gekennzeichnet dadurch, daß**
während des Brühens eine zusätzliche Schließbewegung der Brühkammer (5) ausgeführt wird.

15. Verfahren zur Steuerung des Schließvorgangs der Brühkammer (5) einer Kaffeemaschine in Art einer Espressomaschine gemäß Anspruch 14, **gekennzeichnet dadurch, daß**
die zusätzliche Schließbewegung eine sequenzielle Bewegung ist.

16. Verfahren zur Steuerung des Schließvorgangs der Brühkammer (5) einer Kaffeemaschine in Art einer Espressomaschine gemäß Anspruch 13 oder 14, **gekennzeichnet dadurch, daß**
die zusätzliche Schließbewegung bis zum Ende des Brühvorgangs oder bis zum Erreichen einer maximalen Schließstellung der Brühkammer (5) fortgesetzt wird

## Claims

1. Control device for closing and opening of extraction chamber (5) of a coffee machine of the espresso type, the aforementioned extraction chamber (5) comprising two parts (3, 4) movable relative to each other by an electric motor (6) that serves to open or close extraction chamber (5), **characterized in that** it presents
- means for measuring the amperage of the current supplying the motor (6), at least during extraction chamber (5) closure phase;
- means for detecting a fall of the derivative relative to the supply current time below a predetermined threshold, enabling the optimum closed position of extraction chamber (5) to be detected, so as to stop the movement of movable parts (3, 4) on reaching this position.

2. Control device according to claim 1 **characterized in that** the measurement means consist of:
- a measuring electrical resistance (R) on the terminals of which the voltage V_{R:} is proportional to the value of the supply current to the motor (6),
- an assembly (11) with non-inversing operational amplifier for amplifying the voltage V_{R} at the terminals of the measuring resistance (R),
in order to obtain an electrical quantity (S) that reflects the supply current used to operate the detection means.

3. Control device according to any one of claims 1 or 2 **characterized in that**
it includes an analog-digital converter for converting the supplied electrical current or the electrical quantity (S) into a digital value.

4. Control device according to claim 3 **characterized in that**
the detection means consist of a microprocessor with an input terminal that receives the numerical quantity reflecting the supply current, and a computation programmed for the derivative relative to time of the said current or of the said electrical quantity.

5. Control device according to any one of claims 1 or 4 **characterized in that**
the detection means consist of at least one control output for the electric motor (6) depending on the value of the derivative relative to time.

6. Control device according to any of claims 1 to 5 **characterized in that** it includes a position sensor (10) for detecting when the extraction chamber (5) is open in relation to the angular position of the motor (6) or transmission gearing (7).

7. Control device according to any of claims 1 to 6 **characterized in that** it comprises at least one sensor (15, 16) for detecting the presence of a small dose (2).

8. Control device according to claim 7 **characterized in that** it includes a sensor (15) detecting the presence of a small dose (2) in the upper position and a sensor (16) detecting the presence of a small dose (2) in the lower position.

9. Control device according to any of claims 1 to 8 **characterized in that** it includes a position sensor (10) and a plate (14) secured to a transmission gearing (7), the said gear being divided into two half-disks with different radii and a plate (14) being positioned on the gearing (7) so that the transition fronts (17) between the two half plates pass, respectively opposite position sensor (10) when extraction chamber (5) is open and when extraction chamber (6) is in the maximum closed position.

10. Process for controlling closure of extraction chamber (5) of a coffee machine of the espresso type, said extraction chamber (5) comprising two parts (3, 4) movable relative to each other by an electrical motor (6) so as to open or close extraction chamber (5), the said process able to be implemented by the device according to one of claims 1 to 9, **characterized in that**
- the amperage of the supply current to drive (6) is measured, at least during the extraction chamber (5) closure phase,
- a fall of the derivative is detected relative to the supply amperage below a predetermined threshold in order to detect the optimum closed position of extraction chamber (5), and stop the movement of movable parts (3, 4) on reaching this position.

11. Process for controlling closure of extraction chamber (5) of a coffee machine of the espresso type according to claim 10 **characterized in that** the intensity of the measured supply current is processed in order to obtain a digital quantity that reflects said intensity.

12. Process for controlling closure of extraction chamber (12) on of a coffee machine of the espresso type according to claim 5 **characterized in that** the fall of the derivative is detected relative to the supply amperage by repetitively executing the following steps
- the digital quantity is input at two moments separated by a fixed interval,
- the slope of the straight line passing through the two points defined by their temporal abscissa and their digital quantity ordinate is calculated.

13. Process for controlling closure of extraction chamber (5) of a coffee machine of the espresso type according to claim 12 **characterized in that** motor (6) is stopped when the slope of the straight line passes below the predetermined threshold value during a predetermined number of iterations.

14. Process for controlling the closure of extraction chamber (5) of a coffee machine of the espresso type according to any of claims 10 to 13 **characterized in that** during extraction, an additional movement takes place to close extraction chamber (5).

15. Process for controlling the closure of extraction chamber (5) of a coffee machine of the espresso type according to claim 14 **characterized in that** the additional closure movement is sequential.

16. Process for closing of extraction chamber (5) of a coffee machine of the espresso type according to any one of claim 13 to 14 **characterized in that** the additional closure movement is extended to the end of extraction or until extraction chamber (5) reaches a maximum closed position.
